# EUROPEAN PATENT APPLICATION

(11) **EP 4 772 761 A1**
(43) Date of publication of application: **08.07.2026**
(21) Application number: 24859897.1
(22) Date of filing: 29.08.2024
(51) Int. Cl.: F16C 33/64, C21D 9/40, C22C 38/00, F16C 19/06

(54) **ROLLING BEARING AND METHOD FOR PRODUCING SAME**

(30) Priority: 31.08.2023 JP 2023141257
(71) Applicant: NSK LTD., Tokyo 141-8560 (JP)
(72) Inventor: IWAMARU, Arata, Fujisawa-shi, Kanagawa 251-8501 (JP); NATORI, Masahide, Fujisawa-shi, Kanagawa 251-8501 (JP)
(74) Representative: Grünecker Patent- und Rechtsanwälte PartG mbB
(86) International application number: PCT/JP2024/030945
(87) International publication number: WO 2025/047868

(57) **Abstract**

Provided is a rolling bearing with which it is possible to suppress both white structure peeling and surface starting point peeling without performing carburization or carbonitriding treatment that would lead to a strain on the environment and an increase in manufacturing costs. This rolling bearing (radial ball bearing (1)) comprises a pair of steel raceway rings (outer ring (3) and inner ring (5)) and a plurality of rolling elements (balls (6)) rollably held between the pair of raceway rings. The ratio of lower bainite structure in the steel in raceway rings is 35-90% (inclusive), the ratio of residual austenite structure is 5-40% (inclusive), and the remainder is martensite structure and carbide.

## Description

### TECHNICAL FIELD

The present invention relates to a rolling bearing and a method for producing the rolling bearing.

### BACKGROUND ART

When rolling bearings are used for a long period of time under a load, metal fatigue may occur, leading to flaking on raceway surfaces. One type of flaking, the "inclusioninitiated flaking", is the flaking that is initiated at an inclusion inside the steel material that forms an inner ring, outer ring, or rolling element. The "surface-initiated flaking" is the flaking that is initiated at an indentation formed on a raceway surface when foreign matter such as dust is caught inside a bearing. The "white structure flaking" occurs when hydrogen generated during use due to the breakdown of a lubricant penetrates into the steel, causing hydrogen embrittlement, and this flaking is initiated from a structural change known as white structure. This flaking occurs accompanied by cracks from within the material, shortening the life. The various types of flaking described above occur through different mechanisms, and therefore different countermeasures are required according to the type of flaking.

For example, Patent Literature 1 proposes a bearing steel that reduces the surface-initiated flaking and has an excellent rolling life in an environment where foreign matter is present. Patent Literature 1 discloses that, in order to improve the rolling life in an environment where foreign matter is present, the amount of retained austenite in a surface layer after quenching and tempering treatment needs to be set to 20% to 45%. Patent Literature 1 also discloses that, in order to obtain the above amount of retained austenite without the need for the costly and time-consuming carbonitriding treatment, it is necessary to increase the contents of alloying elements as compared with SUJ2 steel, which is a common bearing steel, and to specify the surface hardness after the quenching and tempering treatment.

Patent Literature 2 describes a bearing steel in which the contents of alloying elements in the steel are specified, and in which the total amount of elements dissolved in the matrix components in a predetermined region from the outermost surface and the amount of retained γ are specified in a carburized, quenched, and tempered state or a carbonitrided, quenched, and tempered state. Further, Patent Literature 3 discloses a bearing steel in which, in addition to the specification in Patent Literature 2, a predicted value of √ area max of a maximum inclusion diameter among non-metallic inclusions in the steel is specified. The bearing steels described in Patent Literature 2 and Patent Literature 3 have excellent rolling fatigue life even in an environment where white structure change occurs due to hydrogen.

### CITATION LIST

### PATENT LITERATURE

Patent Literature 1: JP2004-124215A
Patent Literature 2: JP6846901B
Patent Literature 3: JP6639839B

### SUMMARY OF INVENTION

### TECHNICAL PROBLEM

However, the bearing steel described in Patent Literature 1 is intended to improve the rolling life particularly in an environment where foreign matter is present, and little consideration is given to the white structure flaking. In addition, the bearing steels described in Patent Literature 2 and Patent Literature 3 mainly reduces the white structure flaking, and no consideration is given to the surface-initiated flaking. Further, the carburizing, quenching and tempering treatment or the carbonitriding, quenching and tempering treatment requires a longer heat treatment time than the normal quenching and tempering treatment, which increases the production cost. Furthermore, when gas carburizing is performed, since modified gases containing H₂, CO, N₂, etc. as main components are used, there is a possibility that future restrictions on their use will be imposed from an environmental standpoint.

The present invention has been made in view of such problems, and an object of the present invention is to provide a rolling bearing and a method for producing the rolling bearing capable of reducing both the white structure flaking and the surface-initiated flaking without performing carburizing or carbonitriding treatment, which leads to an increase in environmental load and production cost.

### SOLUTION TO PROBLEM

The rolling bearing according to the present invention has the following configuration [1].
[1] A rolling bearing including:
   a pair of steel raceways; and
   a plurality of rolling elements that are held so as to roll freely between the pair of raceways, in which
   in the steel of the raceways, a proportion of a lower bainite structure is 35% or more and 90% or less, a proportion of a retained austenite structure is 5% or more and 40% or less, and a remainder includes a martensite structure and a carbide.
      A preferred embodiment of the rolling bearing according to the present invention has the following configuration [2].
[2] The rolling bearing according to [1], in which
   a residual stress is -50 MPa or less.
   The method for producing the rolling bearing according to the present invention has the following configuration [3].
[3] A rolling bearing production method for producing the rolling bearing according to [1] or [2], the method including:
   a step of heating a raceway material to a temperature of 820°C or more and 950°C or less to austenitize the raceway material;
   a cooling step of rapidly cooling the austenitized raceway material to a temperature exceeding an Ms temperature and 270°C or lower; and
   an isothermal transformation treatment step of holding the raceway material after the cooling step at a temperature exceeding the Ms temperature and 270°C or lower for a period of 2 hours or more and 24 hours or less.

### ADVANTAGEOUS EFFECTS OF INVENTION

According to the present invention, since the proportions of the lower bainite structure, the martensite structure, and the retained austenite structure in the structure of the steel constituting the rolling bearing are appropriately controlled, it is possible to provide a rolling bearing and a method for producing the rolling bearing capable of reducing both the white structure flaking and the surface-initiated flaking.

### BRIEF DESCRIPTION OF DRAWINGS

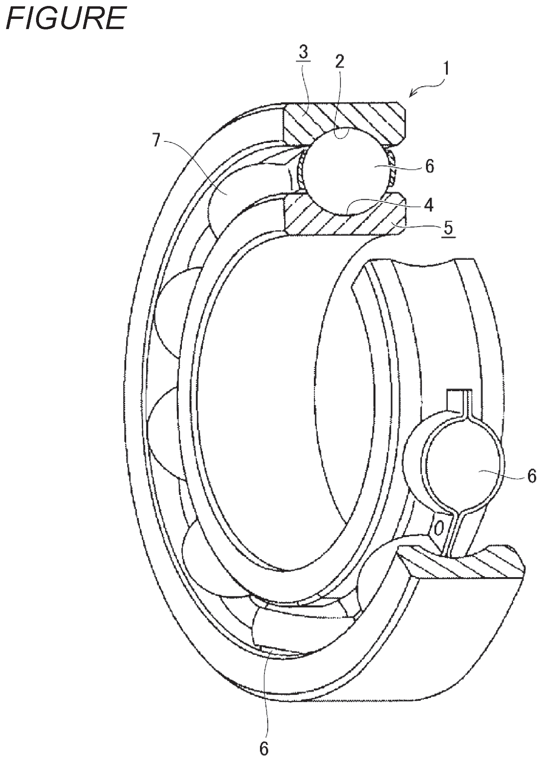

[FIGURE] The FIGURE is a cross-sectional view illustrating a rolling bearing according to an embodiment of the present invention.

### DESCRIPTION OF EMBODIMENTS

As a result of intensive studies, the present inventors have found that it is important to control the structure of the steel constituting the rolling bearing as follows. That is, the present inventors have found that appropriately controlling the proportions of lower bainite, martensite, and retained austenite is effective for reducing white structure flaking due to hydrogen penetration and reducing surface-initiated flaking in an environment where foreign matter is present. In addition, the present inventors have investigated a relation between heat treatment conditions and the structure, and have clarified the heat treatment conditions for obtaining a composite structure with a desired proportion. The present invention has been made based on the above findings.

Hereinafter, an embodiment of the present invention will be described in detail. The present invention is not limited to the embodiment described below.

### [Rolling Bearing]

FIGURE is a cross-sectional view illustrating a rolling bearing according to the embodiment of the present invention. In the present invention, since the type and configuration of the rolling bearing are not particularly limited, a radial ball bearing will be described as an example in the present embodiment. As illustrated in the FIGURE, a radial ball bearing (rolling bearing) 1 includes a steel outer ring 3 having an outer ring raceway surface 2 on an inner peripheral surface thereof, and a steel inner ring 5 having an inner ring raceway surface 4 on an outer peripheral surface thereof. The outer ring 3 and the inner ring 5 form a pair of raceways. A plurality of balls (rolling elements) 6 are disposed between the pair of raceways (between the outer ring raceway surface 2 and the inner ring raceway surface 4). These balls 6 are disposed at equal intervals in a circumferential direction and are held by cages 7 so as to roll freely.

In the rolling bearing according to the present embodiment, the phase composition of the steel constituting the raceways (outer ring 3 and inner ring 5) is appropriately controlled. Specifically, the steel constituting the rolling bearing has a composite structure that includes lower bainite and retained austenite, with the remainder including martensite and carbides. Hereinafter, the phase composition of the steel specified in the present embodiment will be described in detail.

### <Proportion of Lower Bainite Structure: 35% or More and 90% or Less>

When bainite transformation occurs in the structure of steel, compressive residual stress is introduced into a surface layer of the steel material along with the bainite transformation, which has the effect of reducing deformation of the resulting steel material. The lower bainite structure is also considered to be a structure that affects white flaking. When a proportion of the lower bainite structure is less than 35%, it is difficult to ensure the hardness of the raceways, and white structure flaking is likely to occur. Therefore, the proportion of the lower bainite structure in the steel constituting the raceways of the rolling bearing is 35% or more, preferably 40% or more, and more preferably 50% or more.

On the other hand, when the proportion of the lower bainite structure exceeds 90%, the austenite structure to be described later decreases, and surface-initiated flaking is likely to occur. Therefore, the proportion of the lower bainite structure in the steel constituting the raceways of the rolling bearing is 90% or less, preferably 85% or less, and more preferably 80% or less.

### <Proportion of Retained Austenite Structure: 5% or More and 40% or Less>

The retained austenite structure is a structure that affects surface-initiated flaking. When the proportion of the retained austenite structure is less than 5%, surface-initiated flaking is likely to occur. Therefore, the proportion of the retained austenite structure in the steel constituting the raceways of the rolling bearing is 5% or more, preferably 8% or more, more preferably 10% or more.

On the other hand, when the proportion of the retained austenite structure exceeds 40%, the hardness for a raceway cannot be sufficiently ensured. Therefore, the proportion of the retained austenite structure in the steel constituting the raceways of the rolling bearing is 40% or less, preferably 35% or less, and more preferably 30% or less.

### <Remainder: Martensite Structure and Carbides>

In the present embodiment, the martensite structure is not a particularly necessary structure, and it is preferable that the amount of martensite structure in the steel is small. In addition, carbides dispersed in the lower bainite structure are structures that are inevitably formed in a method for producing rolling bearings, and do not affect white structure flaking or surface-initiated flaking. Therefore, in the steel constituting the raceways of the rolling bearing, as long as the proportions of the lower bainite structure and the retained austenite structure are within the above ranges and the remainder includes the martensite structure and carbides, the proportions are not particularly limited.

However, when the proportion of carbides increases, the steel material becomes soft, and it may be difficult to obtain a desired hardness for the steel constituting the raceways of the rolling bearing. Therefore, the proportion of carbides in the steel constituting the raceways of the rolling bearing is preferably 20% or less, more preferably 15% or less, and still more preferably 12% or less. In addition, as described above, it is preferable that the amount of martensite structure in the steel constituting the raceways of the rolling bearing is small, and is, for example, preferably 40% or less, more preferably 25% or less, and still more preferably 20% or less. It is assumed that ferrite and pearlite are substantially absent in the steel constituting the raceways of the rolling bearing according to the present embodiment, and it is preferable that the content of each is 0%.

### (Method for Calculating Proportion of Each Structure)

The percentage of each structure can be calculated using, for example, the following method. After electropolishing a test piece to a depth of 300 µm from a surface thereof, the test piece is irradiated with X-rays, and the amount of retained austenite can be calculated based on the integrated intensity ratio of diffraction peaks of the (211) plane of the bcc structure and the (220) plane of the fcc structure. The percentages of other structures can be determined using the EBSD method. The polished test piece is subjected to electron beam irradiation using FE-SEM, phase identification is performed based on the obtained diffraction pattern, and the area ratio of carbides is calculated. In addition, the proportions of the martensite structure and the bainite structure can be calculated by identifying the orientations of the martensite structure and the bainite structure based on the diffraction pattern and calculating an orientation difference between the blocks.

### <Residual Stress: -50 MPa or Less>

As described above, the lower bainite structure in the steel is a structure that affects the residual stress of the steel material. In the present embodiment, by appropriately adjusting the proportion of the lower bainite structure in the steel, the value of the residual stress is controlled, and white structure flaking is reduced. When the residual stress of the rolling bearing is - MPa or less, excellent crack propagation characteristics can be obtained, deformation can be reduced, and good bearing performance can be maintained. Therefore, the residual stress of the rolling bearing is preferably -50 MPa or less, more preferably -70 MPa or less, and still more preferably -100 MPa or less.

### (Method for Measuring Residual Stress)

The residual stress can be measured using, for example, the following method. After electropolishing a test piece to a depth of 300 µm from a surface thereof, the test piece is irradiated with X-rays, and the residual stress is measured based on a diffraction peak of the (211) plane of the bcc structure using the Cosα method.

In the rolling bearing according to the present embodiment, since the proportion of each structure in the steel is appropriately controlled, white structure flaking and surface-initiated flaking can be reduced. In the present embodiment, the composition of the steel material constituting the rolling bearing is not particularly limited. For example, SUJ2 steel material specified in JIS G 4805: 2019 or 100CrMnSi6-4 specified in ISO 683-17, which is commonly used as bearing steel, can be used.

In addition, a steel material in which alloying elements are adjusted with respect to the above raw steel material, for example, a steel material containing 0.60% or more by mass and 1.21% or less by mass of C, 0.40% or more by mass and 1.02% or less by mass of Si, 0.55% or more by mass and 1.51% or less by mass of Mn, 0.75% or more by mass and 3.00% or less by mass of Cr, 1.00% or less by mass of Mo, 0.20% or less by mass of Ni, 0.20% or less by mass of Cu, 0.025% or less by mass of S, 0.020% or less by mass of P, and 0.0015% or less by mass of O, with the remainder including Fe and unavoidable impurities, can also be used.

### [Method for Producing Rolling Bearing]

The method for producing a rolling bearing according to the present embodiment will be described below in the order of the steps.

### <Austenitizing Step>

First, a steel material is machined by turning to form the shape of a rolling bearing raceway, and the machined raceway material is heated to a temperature of A₁ or higher to perform an austenitizing process. In this step, austenite is the main structure in the steel.

### (Temperature of Austenitizing Step)

As a raceway of a rolling bearing, in order to dissolve carbon in the steel through heating to obtain a desired hardness, the temperature of the austenitizing step needs to be 820°C or higher, and preferably 840°C or higher. On the other hand, at a temperature of 950°C, since carbides are almost completely dissolved in the steel, heating at a temperature exceeding 950°C is not necessary, and the production cost also increases. Therefore, the temperature of the austenitizing step is set to 950°C or lower, and preferably 880°C or lower.

### <Cooling Step>

Next, the austenitized raceway material is rapidly cooled to a temperature exceeding the Ms temperature and 270°C or lower. In the present specification, rapid cooling refers to cooling at a speed fast enough that the temperature does not reach the Ps line (temperature at which the pearlite structure starts to form) or the Bs line (temperature at which bainite transformation starts). Examples of a rapid cooling method include cooling with salt.

After the cooling step, if the raceway is cooled to a temperature equal to or lower than the Ms temperature before the following isothermal transformation treatment step is performed, martensite transformation will start, and the obtained raceway will contain a martensite structure. In the present embodiment, the proportions of the lower bainite structure and the retained austenite structure are specified, and if a large amount of the martensite structure is contained, the proportions of the lower bainite structure and the retained austenite structure will change. In the present embodiment, the martensite structure is unnecessary. Therefore, it is preferable to perform the isothermal transformation treatment step without cooling the raceway to a temperature equal to or lower than the Ms temperature after the cooling step.

### <Isothermal Transformation Treatment Step>

Thereafter, the raceway material after the cooling step is held at a temperature exceeding the Ms temperature and 270°C or lower. By this isothermal transformation treatment step, austenite is transformed into a lower bainite structure.

### (Holding Time in Isothermal Transformation Treatment Step)

If the holding time in the isothermal transformation treatment step is less than 2 hours, it is impossible to obtain a lower bainite structure of 50% or more. Therefore, the holding time in the isothermal transformation treatment step is 2 hours or more, preferably 3 hours or more, and more preferably 4 hours or more. On the other hand, if the holding time in the isothermal transformation treatment step exceeds 24 hours, the proportion of the lower bainite structure in the steel exceeds 90%, and surface-initiated flaking is likely to occur. Therefore, the holding time in the isothermal transformation treatment step is within 24 hours, preferably within 16 hours, and more preferably within 12 hours.

### (Holding Temperature in Isothermal Transformation Treatment Step)

While a lower holding temperature in the isothermal transformation treatment step allows for achieving a desired hardness, if the holding temperature is equal to or lower than the Ms temperature, a part of the austenite structure and the martensite structure in the steel will not transform into the lower bainite structure even with extended holding time, and a lower bainite structure with a desired proportion cannot be obtained. Therefore, the holding temperature in the isothermal transformation treatment step is a temperature exceeding the Ms temperature, preferably a temperature higher than the Ms temperature by 10°C or more, and more preferably a temperature higher than the Ms temperature by 20°C. A specific example of the holding temperature in the isothermal transformation treatment step is preferably 180°C or higher, and more preferably 200°C or higher.

On the other hand, if the temperature at which the raceway material is held after the cooling step exceeds 270°C, upper bainite will form, which adversely affects the mechanical properties of the steel material. Therefore, the holding temperature in the isothermal transformation treatment step is a temperature of 270°C or lower, preferably a temperature of 250°C or lower, and more preferably a temperature of 240°C or lower.

Thereafter, the raceway material after the isothermal transformation treatment step is cooled, and then ground to produce a raceway of a rolling bearing. Thereafter, a rolling bearing can be produced by assembling a cage and rolling elements into a pair of raceways using a common method. In the present embodiment, heat treatment is performed on the raceway material that is already machined into the shape of a raceway to prepare a pair of raceways, and rolling elements may also be prepared using a similar method.

When rolling bearings are produced using the production method according to the present embodiment, the proportion of each structure in the steel can be appropriately controlled without performing carburizing or carbonitriding treatment, which leads to an increase in environmental load and production cost. Therefore, it is possible to produce a rolling bearing that reduces white structure flaking and surface-initiated flaking and enables a longer life.

### [Examples]

Hereinafter, examples and comparative examples of the rolling bearing according to the present embodiment will be described. First, with respect to test pieces subjected to heat treatment under various heat treatment conditions, the proportion of each structure was calculated, physical properties were measured, and changes in structure and physical properties depending on the heat treatment conditions were examined.

### <Preparation of Test Pieces>

Steel materials having compositions within the ranges shown in Table 1 below were prepared, and various heat treatments were performed under the heat treatment conditions shown in Table 2 below to prepare test pieces.

Specifically, symbol A shown in Table 2 represents a heat treatment condition in which an austenitizing step of heating a steel material to a temperature of 860°C is performed, and after a cooling step of cooling the steel material to a temperature of 210°C, an isothermal transformation treatment step of holding the steel material at a temperature of 210°C for 6 hours without lowering the temperature is performed. Symbol B represents a heat treatment condition in which the isothermal transformation treatment step of Example No. 1 is performed at a temperature of 210°C for 8 hours. Symbol C represents a heat treatment condition in which tempering is performed at a temperature of 200°C after a quenching step of heating the steel material to a temperature of 820°C is performed.

Symbol D represents a heat treatment condition in which tempering is performed at a temperature of 240°C after a quenching step of heating the steel material to a temperature of 820°C is performed. Symbol E represents a heat treatment condition in which tempering is performed at a temperature of 180°C after a quenching step of heating the steel material to a temperature of 860°C is performed. Symbol F represents a heat treatment condition in which a step of heating the steel material to a temperature of 860°C is performed, and after a cooling step of cooling the steel material to a temperature of 210°C, an isothermal transformation treatment step of holding the steel material at a temperature of 210°C for 72 hours without lowering the temperature is performed.

### <Calculation of Proportion of Each Structure>

The structure of each obtained test piece was calculated using the following method. After electropolishing the test piece to a depth of 300 µm from a surface thereof, the test piece was irradiated with X-rays, and the amount of retained austenite was calculated based on the integrated intensity ratio of diffraction peaks of the (211) plane of the bcc structure and the (220) plane of the fcc structure. The percentage of other structures was determined using the EBSD method. The polished test piece was subjected to electron beam irradiation using FE-SEM, phase identification was performed based on the obtained diffraction pattern, and the area ratio of carbides was calculated. In addition, the proportions of the martensite structure and the bainite structure was calculated by identifying the orientations of the martensite structure and the bainite structure based on the diffraction pattern and calculating an orientation difference between the blocks. The proportion of each structure is shown in Table 2 below.

### <Measurement of Physical Properties>

### (Measurement of Residual Stress)

After electropolishing the test piece to a depth of 300 µm from a surface thereof, the test piece was irradiated with X-rays, and the residual stress was measured based on a diffraction peak of the (211) plane of the bcc structure using the Cosα method.

### (Measurement of Hardness)

The Vickers hardness after the heat treatment was measured at five points at the center of the test piece under a test load of 1 kgf, and the average value thereof was taken as the measured value of hardness.

Next, a rolling fatigue life test was performed on the bearings prepared by performing a heat treatment under the various heat treatment conditions described above.

### <Preparation of Test Deep Groove Ball Bearings (Rolling Bearings)>

By turning a steel material having a composition shown in Table 1 below, a raceway (inner ring and outer ring) material for deep groove ball bearings having a designation number of 6206 specified in JIS B1513-1995 was prepared. Next, the raceway material was subjected to a heat treatment under the heat treatment conditions of symbols A to F shown in Table 2 below, and then the material after the heat treatment was ground to prepare raceways. Thereafter, each test deep groove ball bearing was prepared by combining 3/8 inch steel balls made of SUJ2 steel specified in JIS G 4805: 2019 and cages made of resin with the obtained raceway.

### <Rolling Fatigue Life Test>

The prepared test deep groove ball bearings were mounted on a radial type fatigue testing machine, and a rolling fatigue life test was performed under the following conditions to measure white structure flaking life and surface-initiated flaking life. This test was performed five times for each test deep groove ball bearing, and the average value of the life (L₅₀) at which the cumulative failure probability reached 50% was obtained.

### (Measurement Conditions of White Structure Flaking Life)

Test load (radial load): 910 kgf
Rotation speed: 3000 min⁻¹
Lubricant: Special lubricant in which hydrogen is easily generated due to decomposition of lubricant

### (Measurement Conditions of Surface-initiated Flaking Life)

Test load (radial load): 635 kgf
Rotation speed: 3000 min⁻¹
Lubricant: RO68 (containing 0.05 g/1.2 L of iron powder with a size of about 100 um and a hardness of 870 HV)

The measurement results of the physical properties and the measurement results of the rolling fatigue life test are shown in Table 3 below. In the white structure flaking test and the surface-initiated flaking test shown in Table 3 below, Comparative Example No. 1, which used the commonly used heat treatment condition denoted by symbol C, was used as a reference, and the results are expressed as a ratio relative to the measurement results of this Comparative Example No. 1.

**[Table 1]**

| Composition of the used steel material (mass%) | | | | | | | | | |
|---|---|---|---|---|---|---|---|---|---|
| The remainder includes Fe and unavoidable impurities | | | | | | | | | |
| C | Si | Mn | Cr | Mo | Ni | Cu | S | P | O |
| 0.97 | 0.54 | 1.06 | 1.45 | 0.03 | 0.07 | 0.12 | 0.004 | 0.013 | 0.0003 |

**[Table 2]**

| No. | | Heat treatment conditions | | | | Proportion (%) of each structure | | | |
|---|---|---|---|---|---|---|---|---|---|
| | | Symbol | Heating temperature | Temperature and time in isothermal transformation treatment step | Tempering step temperature | Lower bainite structure | Martensite structure | Retained austenite structure | Carbides |
| Examples | 1 | A | 860°C | 210°C, 6h | - | 55 | 14 | 24 | 7 |
| | 2 | B | 860°C | 210°C, 8h | - | 74 | 6 | 13 | 7 |
| Comparative Examples | 1 | C | 820°C | - | 200°C | - | 78 | 11 | 11 |
| | 2 | o | 820°C | - | 240°C | - | 86 | 3 | 11 |
| | 3 | E | 860°C | - | 180°C | - | 77 | 16 | 7 |
| | 4 | F | 860°C | 210°C, 72h | - | 93 | - | - | 7 |

**[Table 3]**

| No. | | Physical properties | | Rolling fatigue life test | | | |
|---|---|---|---|---|---|---|---|
| | | Residual stress (Mpa) | Hardness (HV) | White structure flaking test | | Surface-initiated flaking test | |
| | | | | L₅₀ life (hr) | Life ratio compared with Comparative Example No. 1 | L₅₀ life (hr) | Life ratio compared with Comparative Example No. 1 |
| Examples | 1 | -140.3 | 724 | 310 | 1.24 | 32 | 1.18 |
| | 2 | -127.3 | 699 | 309 | 1.23 | 28.6 | 1.10 |
| Comparative Examples | 1 | 45.3 | 730 | 250 | 1.00 | 27 | 1.00 |
| | 2 | 13.0 | 707 | - | - | 19 | 0.71 |
| | 3 | 56.0 | 747 | 190 | 0.76 | 53 | 1.91 |
| | 4 | -61.7 | 700 | 285 | 1.14 | 10 | 0.37 |

As shown in Tables 2 and 3, in Examples No. 1 and 2, the proportions of the lower bainite structure and the retained austenite structure were within the ranges specified in the present invention, and the remainder included the martensite structure and carbides. Therefore, it was possible to reduce white structure flaking due to hydrogen penetration, and it was possible to reduce surface-initiated flaking in an environment where foreign matter is present. In addition, since Examples No. 1 and 2 have a lower bainite structure, the residual stress has a negative value, resulting in compressive residual stress, which leads to excellent crack propagation characteristics.

On the other hand, in Comparative Example No. 1, the isothermal transformation treatment was not performed, and no lower bainite structure was formed. Therefore, as compared with Examples No. 1 and 2, the life in the white structure flaking test and the surface-initiated flaking test was shortened. In Comparative Example No. 2, since the isothermal transformation treatment was not performed, no lower bainite structure was formed, and the proportion of the retained austenite structure was extremely low. Therefore, the life in the surface-initiated flaking test was shortened. Therefore, the white structure flaking test was not performed.

Comparative Example No. 3 has a higher heating temperature and more carbon dissolved in the steel as compared with Comparative Example No. 1, which is considered to result in higher martensite hardness and an improved life ratio in the surface-initiated flaking test. However, in Comparative Example No. 3, the isothermal transformation treatment was not performed, and no lower bainite structure was formed. Therefore, the life in the white structure flaking test was particularly shortened. In Comparative Examples No. 1 to 3, since the residual stress has a positive value, resulting in tensile residual stress, which is considered to lead to poor crack propagation characteristics. In Comparative Example No. 4, since the isothermal transformation treatment was performed at 210°C for 72 hours, the proportion of the lower bainite structure exceeds the range specified in the present invention. Therefore, the life in the surface-initiated flaking test was extremely shortened.

Although various embodiments have been described above with reference to the drawings, it is needless to mention that the present invention is not limited to these examples. It is apparent to those skilled in the art that various changes or modifications can be conceived within the scope described in the claims, and it is understood that the changes or modifications naturally fall within the technical scope of the present invention. In addition, the components described in the above embodiments may be combined in any manner without departing from the spirit of the invention.

The present application is based on a Japanese patent application (No. 2023-141257) filed on August 31, 2023, contents of which are incorporated herein by reference.

### REFERENCE SIGNS LIST

- 1: radial ball bearing
- 2: outer ring raceway surface
- 3: outer ring
- 4: inner ring raceway surface
- 5: inner ring
- 6: ball
- 7: cage

## Claims

1. A rolling bearing comprising:
a pair of steel raceways; and
a plurality of rolling elements that are held so as to roll freely between the pair of raceways, wherein
in the steel of the raceways, a proportion of a lower bainite structure is 35% or more and 90% or less, a proportion of a retained austenite structure is 5% or more and 40% or less, and a remainder includes a martensite structure and a carbide.

2. The rolling bearing according to claim 1, wherein
a residual stress is -50 MPa or less.

3. A rolling bearing production method for producing the rolling bearing according to claim 1 or 2, the method comprising:
a step of heating a raceway material to a temperature of 820°C or more and 950°C or less to austenitize the raceway material;
a cooling step of rapidly cooling the austenitized raceway material to a temperature exceeding an Ms temperature and 270°C or lower; and
an isothermal transformation treatment step of holding the raceway material after the cooling step at a temperature exceeding the Ms temperature and 270°C or lower for a period of 2 hours or more and 24 hours or less.
